# EUROPEAN PATENT APPLICATION

(11) **EP 4 287 578 A1**
(43) Date of publication of application: **06.12.2023**
(21) Application number: 22745605.0
(22) Date of filing: 14.01.2022
(51) Int. Cl.: H04L 45/302

(54) **NETWORK, METHOD FOR ADJUSTING NETWORK, NETWORK DEVICE, RECEPTION TERMINAL, AND TRANSMISSION TERMINAL**

(30) Priority: 27.01.2021 JP 2021011523
(71) Applicant: Sony Group Corporation, Tokyo 108-0075 (JP)
(72) Inventor: TOBA, Kazuaki, Tokyo 108-0075 (JP); MORITA, Hiroshi, Tokyo 108-0075 (JP); YAMAMOTO, Masanari, Tokyo 108-0075 (JP)
(74) Representative: 2SPL Patentanwälte PartG mbB
(86) International application number: PCT/JP2022/001061
(87) International publication number: WO 2022/163380

(57) **Abstract**

A size of a buffer memory to be prepared on a receiving side for synchronized playback is reduced.

A network can determine a plurality of paths for sending, from a transmission terminal to a reception terminal, a corresponding plurality of pieces of content to be played back in synchronization. A latency time difference between the plurality of paths is adjusted by an adjustment unit to fall within a predetermined length of time. For example, the adjustment is made by changing the path having the lower latency. This makes it possible to reduce the size of the buffer memory to be prepared on the receiving side. For example, the adjustment unit sends information on an adjusted latency time to a plurality of reception terminals connected to the plurality of paths. On the basis of this information, the plurality of reception terminals can set a buffering size used during synchronized playback of the content to an appropriate size.

## Description

### [Technical Field]

The present technique relates to a network, a network adjustment method, a network device, a reception terminal, and a transmission terminal, and particularly relates to a network or the like capable of determining a plurality of paths for transmitting, from a transmission terminal to a reception terminal, a corresponding plurality of pieces of content to be played back in synchronization.

### [Background Art]

For example, PTL 1 proposes a system pertaining to synchronized playback of a plurality of streams. In this system, synchronized playback is achieved by performing transmission/reception flow control on the receiving side and the transmitting side, and when there is a large latency time difference on the network, an increased burden is placed on transmitting/receiving devices, and a larger buffer memory must be prepared on the receiving side.

### [Citation List]

### [Patent Literature]

[PTL 1]
JP 2002-354029A

### [Summary]

### [Technical Problem]

An object of the present technique is to reduce the size of the buffer memory to be prepared on a receiving side for synchronized playback.

### [Solution to Problem]

A concept of the present technique is a network capable of determining a plurality of paths for sending, from a transmission terminal to a reception terminal, a corresponding plurality of pieces of content to be played back in synchronization, the network including:
an adjustment unit that adjusts a latency time difference between the plurality of paths to fall within a predetermined length of time.

The network according to the present technique is capable of determining, as dedicated lines, a plurality of paths for sending, from a transmission terminal to a reception terminal, a corresponding plurality of pieces of content to be played back in synchronization. The latency time difference between the plurality of paths is adjusted by the adjustment unit to fall within a predetermined length of time.

For example, the adjustment unit may be configured to perform adjustment by changing a path on a side having a lower latency time, or, for example, the adjustment unit may be configured to perform the adjustment by changing the path on the side having the lower latency time to a longer-distance path. Additionally, in this case, for example, the adjustment unit may be configured to perform the adjustment by changing the path on the side having the lower latency time to a path including a network device having a high processing latency.

For example, the adjustment unit may be included in a receiving-side digital service unit that constitutes the plurality of paths. In this case, for example, the receiving-side digital service unit that constitutes the plurality of paths may be configured to perform adjustment based on synchronized playback information included in a connection request sent from the reception terminal to the transmission terminal.

Here, for example, the synchronized playback information may include an identifier indicating that synchronized playback is assumed. With this identifier, the digital service unit can easily confirm that synchronized playback is assumed, and perform the adjustment reliably.

Additionally, here, for example, the synchronized playback information may include an address of a reception terminal to be synchronized. The address of the reception terminal makes it possible for the adjustment unit to recognize the digital service unit to which the reception terminal to be synchronized is connected, communicate with the digital service unit, and make the adjustment in a favorable manner.

In this manner, in the present technique, the latency time difference between the plurality of paths is adjusted such that the latency time difference falls within the predetermined length of time. Accordingly, the size of the buffer memory to be prepared on the receiving side for synchronized playback can be reduced.

Note that in the present technique, for example, the adjustment unit may be configured to send information on the adjusted latency time to a plurality of reception terminals connected to the plurality of paths. This makes it possible for the plurality of reception terminals to set the buffering size used during synchronized playback of the content to an appropriate size, which makes it possible to perform synchronized playback in a favorable manner.

Additionally, in the present technique, for example, the plurality of paths may include a first path and a second path, the first path connecting an image capturing device which is a transmission terminal to a video receiver which is a reception terminal, and the second path connecting a sound collection device which is a transmission terminal to an audio player which is a reception terminal. In this case, the processing for performing synchronized playback of the video and audio played back by the video receiver and the audio player can be performed in a favorable manner.

Another concept of the present technique is a network device, including:
a control unit that controls processing of selecting a path over which to send content from a transmission terminal to a reception terminal on the basis of a connection request from the reception terminal to the transmission terminal, and processing of adjusting, on the basis of the connection request, a latency time difference from another path over which to send other content to be played back in synchronization with the content to fall within a predetermined length of time.

In the present technique, the processing of selecting a path over which to send the content from the transmission terminal to the reception terminal is controlled by the control unit on the basis of a connection request from the reception terminal to the transmission terminal. Additionally, processing of adjusting, on the basis of the connection request, a latency time difference from another path over which to send other content to be played back in synchronization with the content to fall within a predetermined length of time, is controlled by the control unit.

In this manner, in the present technique, the latency time difference between paths on a network over which a plurality of pieces of content to be played back in synchronization is adjusted to fall within a predetermined length of time. Accordingly, the size of the buffer memory to be prepared on the receiving side for synchronized playback can be reduced.

Additionally, another concept of the present technique is a reception terminal, including:
a transmission unit that sends, to a digital service unit on a network to which the reception terminal is connected, a connection request to a transmission terminal, wherein when there is other content to be played back in synchronization with content sent from the transmission terminal, the connection request includes synchronized playback information.

In the present technique, the transmission unit sends, to a digital service unit on a network to which the reception terminal itself is connected, a connection request to a transmission terminal. Here, when there is content to be played back in synchronization with content sent from the transmission terminal, the connection request includes synchronized playback information.

In this manner, in the present technique, the synchronized playback information is included in the connection request sent to the digital service unit when there is content which is to be played back in synchronization with the content sent from the transmission terminal. Accordingly, in the digital service unit, processing for making the adjustment is performed such that the latency time difference between the plurality of content paths to be played back in synchronization falls within a predetermined length of time, which makes it possible to reduce the size of the buffer memory prepared on the receiving side for the synchronized playback.

For example, the reception terminal may further include a control unit that sets a buffering size used when playing back the content on the basis of information, sent from the digital service unit, on a latency time adjusted on the basis of the synchronized playback information. In this case, the buffering size used during synchronized playback of the content can be set to an appropriate size, which makes it possible to perform synchronized playback in a favorable manner.

In this case, for example, the control unit may be configured to set the buffering size used when playing back the content based further on a playback processing time difference from another reception terminal that plays back the other content to be played back in synchronization. This makes it possible to set the buffering size used during synchronized playback of the content to a more appropriate size, which makes it possible to increase the accuracy of the synchronized playback.

Additionally, another concept of the present technique is a transmission terminal, including:
a receiving unit that receives, from a digital service unit on a network to which the transmission terminal is connected, a connection request from a reception terminal; and
a transmission unit that, when the connection request is received from the reception terminal and there is other content to be played back in synchronization with content transmitted from the transmission terminal itself to the reception terminal, sends, to the digital service unit, a notification to the reception terminal that the other content is present.

In the present technique, the receiving unit receives, from a digital service unit on a network to which the transmission terminal is connected, a connection request from a reception terminal; and Then, when the connection request is received from the reception terminal and there is other content to be played back in synchronization with content transmitted from the transmission terminal itself to the reception terminal, the transmission unit sends, to the digital service unit to which the transmission terminal itself is connected, a notification to the reception terminal that the other content is present.

In this manner, in the present technique, when the connection request from the reception terminal is received from the digital service unit to which the transmission terminal itself is connected and there is other content to be played back in synchronization with content transmitted from the transmission terminal itself to the reception terminal, the transmission unit sends, to the digital service unit to which the transmission terminal itself is connected, a notification to the reception terminal that the other content is present. Accordingly, when there is other content to be played back in synchronization, the reception terminal can be notified thereof, which enables the viewer to know that there is other content to be played back in synchronization from the reception terminal and use a remote controller or the like to make instructions for the synchronized playback to the reception terminal on the receiving side.

For example, the notification may include information for specifying the transmission terminal that transmits the other content. Through this, the viewer can easily specify the transmission terminal that transmits the other content, and can efficiently instruct the reception terminal that receives other content to connect to the transmission terminal that transmits that other content.

### [Brief Description of Drawings]

[Fig. 1]

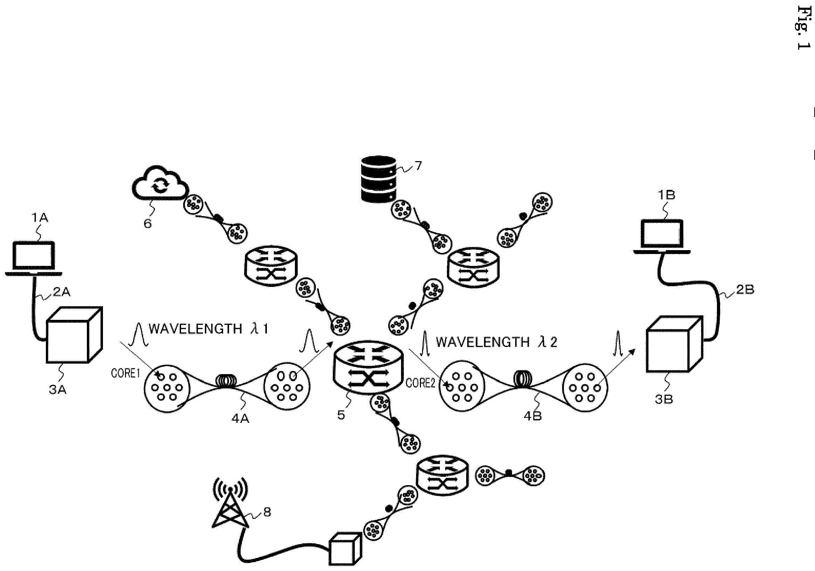

   Fig. 1 is a diagram illustrating an example of a network environment in which the present technique is applied.
[Fig. 2]

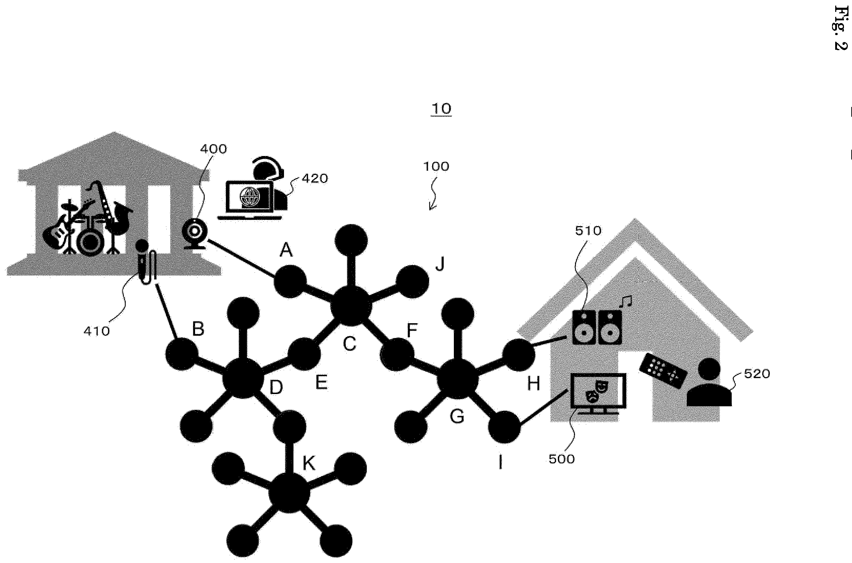

   Fig. 2 is a diagram illustrating an example of the configuration of a network system for describing an embodiment.
[Fig. 3]

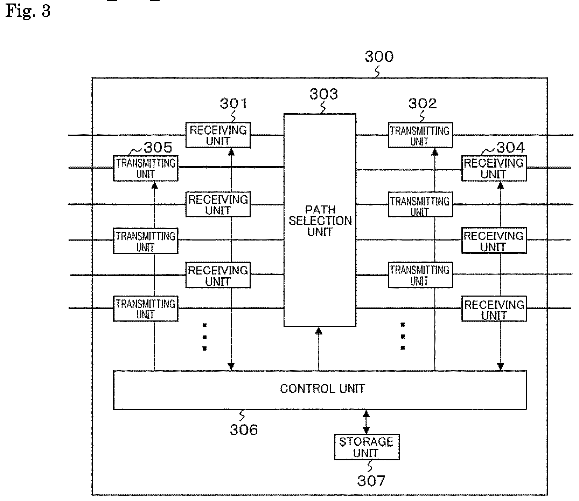

   Fig. 3 is a block diagram schematically illustrating an example of the configuration of a node (optical network unit, optical switch/router).
[Fig. 4]
   Fig. 4 is a block diagram schematically illustrating an example of the configuration of an image capturing device that is a transmission terminal.
[Fig. 5] Fig. 5 is a block diagram schematically illustrating an example of the configuration of a sound collection device that is a transmission terminal.
[Fig. 6]

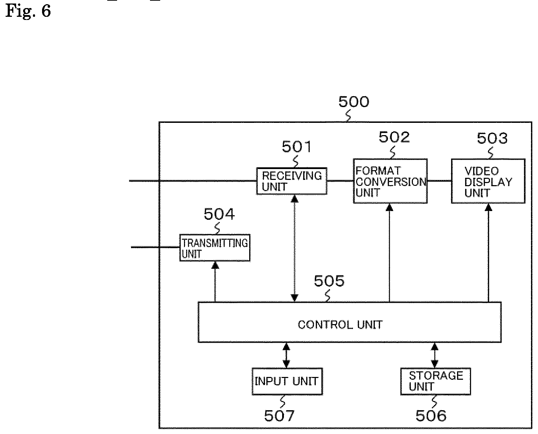

   Fig. 6 is a block diagram schematically illustrating an example of the configuration of a video receiver that is a reception terminal.
[Fig. 7]

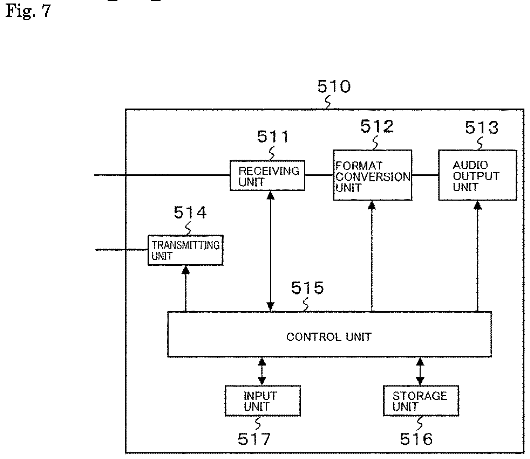

   Fig. 7 is a block diagram schematically illustrating an example of the configuration of an audio player that is a reception terminal.
[Fig. 8]

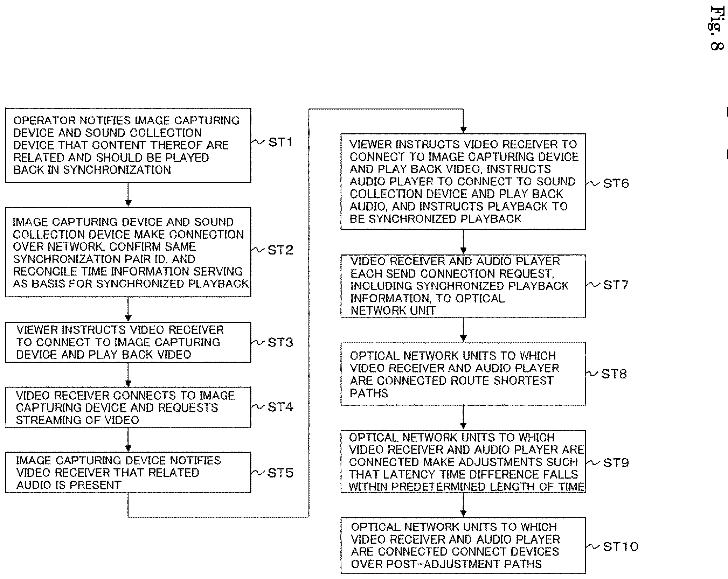

   Fig. 8 is a flowchart illustrating an example of a processing sequence for establishing respective paths (a first path and a second path) for video and audio in a network system.
[Fig. 9]

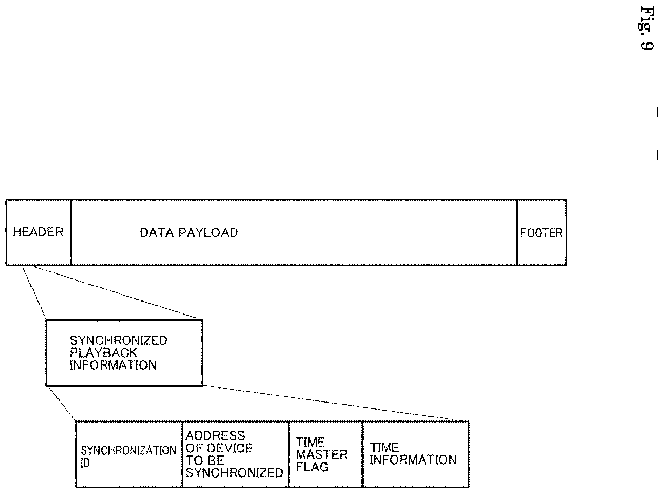

   Fig. 9 is a diagram illustrating an example of the format of the connection request.
[Fig. 10]

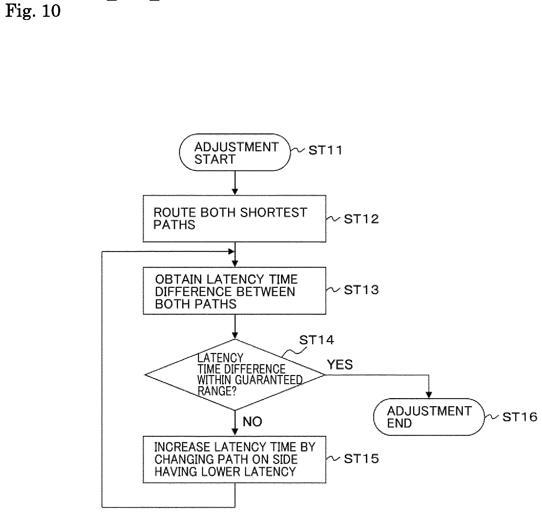

   Fig. 10 is a flowchart illustrating an example of a path adjustment processing sequence.
[Fig. 11]

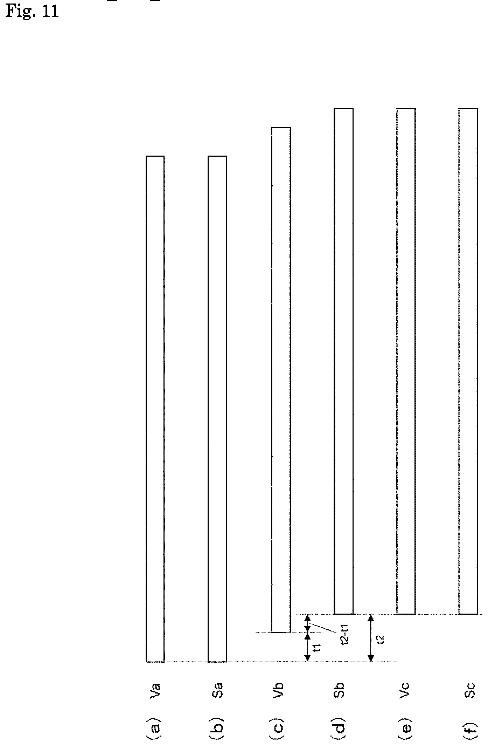

   Fig. 11 is a diagram illustrating an example of a relationship between a latency time difference between video and audio paths on a network and buffering sizes in a video receiver and an audio player.
[Fig. 12]

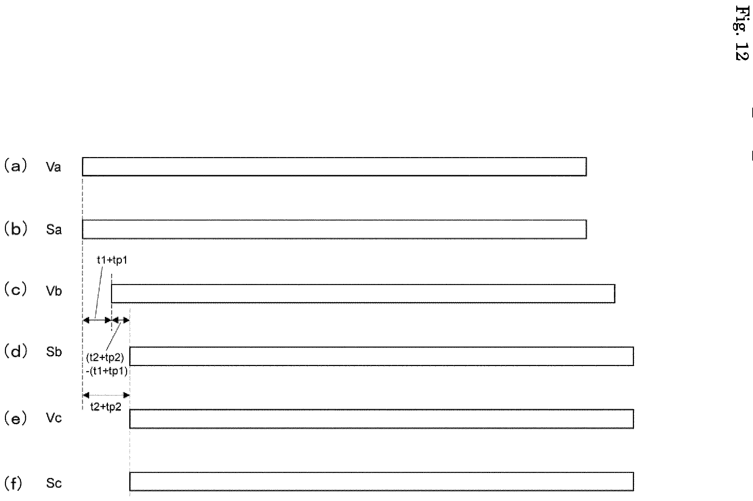

   Fig. 12 is a diagram illustrating an example of a relationship between a latency time difference in video and audio paths on a network, a time difference between playback processing in a video receiver and an audio player, and buffering sizes in the video receiver and the audio player.

### [Description of Embodiments]

Modes for carrying out the present invention (hereinafter referred to as "embodiments") will be described hereinafter. The descriptions will be given in the following order.

### 1. Embodiment

### 2. Variations

### <1. Embodiment>

### [Description of Prerequisite Technology]

Fig. 1 illustrates an example of a network environment in which the present technique is applied. Consider a case where communication is performed between a terminal 1A and a terminal 1B. The terminal 1A is connected to an optical network unit (ONU) 3A by a network cable 2A. Meanwhile, the terminal 1B is connected to an optical network unit 3B by a network cable 2B.

A backbone core network is configured between the optical network unit 3A and the optical network unit 3B. The backbone core network is constituted by multicore fibers 4A and 4B, an optical switch/router 5, and the like, and is also connected to a cloud 6, storage 7, a wireless base station 8, and the like to form a network that enables devices to connect to and communicate with each other.

Here, a signal from the terminal 1A is input from the optical network unit 3A to a core 1 of the multi-core fiber 4 using a wavelength λ1. This signal is then input to a core 2 of the multi-core fiber 4B by the optical switch/router 5 using a wavelength λ2, and is output from the optical network unit 3B to the terminal device 1B.

In this path, the core and wavelength transfers are performed by the optical switch/router 5, but the path between the terminal 1A and the terminal 1B is not shared with other terminals partway along the path, with the delivery path instead being determined as a dedicated line. When a network is constructed with such a configuration, for example, the connection between the terminal 1A and the terminal 1B can be considered to be the same as a connection between devices using a general wired connection.

In order to synchronously play back data transmitted over a plurality of paths, it is necessary to provide buffer memory to absorb a latency time difference among the plurality of paths. When a device is connected remotely, the latency in the path is high, and the latency time difference among the plurality of paths is also high. In this case, it is necessary to prepare a massive buffer memory on the receiving side in order to perform synchronized playback, but the maximum size thereof cannot be defined unless the transmission paths can be defined in detail.

In the present technique, instead of minimizing the latency of the paths, the latency time difference among a plurality of paths that transmit content to be played back in synchronization is adjusted so as to fall within a predetermined length of time. Specifically, adjustments are made such that of peer-to-peer paths between paired devices, the path on the side with the lower latency is changed. Through this, the present technique can reduce the size of the buffer memory to be prepared on the receiving side for synchronized playback. For example, if the latency time difference among a plurality of paths is set to fall within about 10 ms, it is only necessary to prepare a buffer memory of a size corresponding thereto.

### [Description of Embodiment]

An embodiment will be described with reference to the example of the configuration of a network system 10 illustrated in Fig. 2. In this network system 10, an image capturing device 400 and a sound collection device 410 serving as transmission terminals are each connected to a network 100 independently, and stream video and audio, respectively, to the network 100. Additionally, in this network system 10, a video receiver 500 and an audio player 510 serving as reception terminals are each connected to the network 100 independently, and receive video and audio streams, respectively, from the network 100.

In the network 100, a black circle represents a node of the network (an optical network unit or an optical switch/router). The network devices which are the optical network unit and the optical switch/router are called "nodes" as appropriate, in the sense of being repeaters in the network. In the network 100, a first path connecting the image capturing device 400 and the video receiver 500, and a second path connecting the sound collection device 410 and the audio player 510, are determined as dedicated lines.

In this case, the image capturing device 400 and the sound collection device 410 are connected to a transmitting-side optical network unit that constitutes the respective paths, and the video receiver 500 and the audio player 510 are connected to a receiving-side optical network unit that constitutes the respective paths. Specifically, the optical network unit to which the image capturing device 400 is connected is a node A, the optical network unit to which the sound collection device 410 is connected is a node B, the optical network unit to which the video receiver 500 is connected is a node I, and the optical network unit to which the audio player 510 is connected is a node H.

Here, it is assumed that it is necessary for the video of the video receiver 500 and the audio of the audio player 510 to be played back in synchronization. In other words, it is assumed that the video and audio output from the image capturing device 400 and the sound collection device 410, respectively, are content to be played back in synchronization.

Fig. 3 schematically illustrates an example of the configuration of a node (optical network unit, optical switch/router) 300. Here, it is assumed that the optical network unit is connected to a plurality of optical switches/routers as well as being connected to a plurality of terminals and performing switch/router-like operations, and thus the configuration of the optical network unit is the same as that of an optical switch/router.

This node 300 includes receiving units 301 that receive signals arriving from a plurality of paths, transmitting units 302 that transmit those signals to paths leading to destinations, and a path selection unit 303 that enables the plurality of receiving units 301 and the plurality of transmitting units 302 to occupy paths between each terminal by switching paths, transferring wavelengths and cores, and the like.

The node 300 also includes a plurality of receiving units 304 that are provided corresponding to each of the plurality of transmitting units 302 and perform communication for establishing connections, and a plurality of transmitting units 305 that are provided corresponding to each of the plurality of receiving units 301 and perform communication for establishing connections. The node 300 also includes a control unit 306 that controls the various units in the node 300 and a storage unit 307 that stores information handled by the control unit 306.

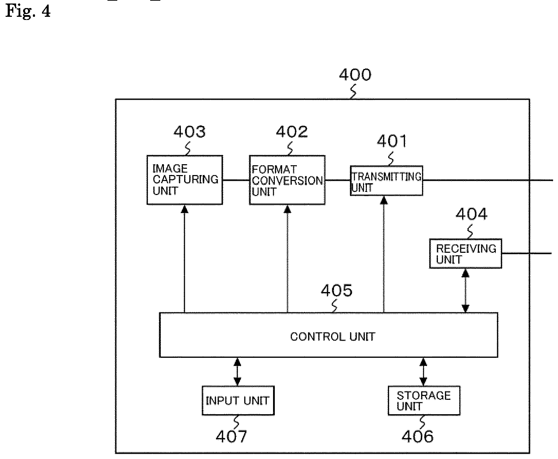

Fig. 4 schematically illustrates an example of the configuration of the image capturing device 400. The image capturing device 400 includes a transmitting unit 401; an image capturing unit (camera) 403 that captures video to be transmitted; a format conversion unit 402 that performs encoding processing on the captured video, converts the video to a transmission format, and sends the video to the transmitting unit 401; and a receiving unit 404 that performs communication for establishing a connection. The image capturing device 400 also includes a control unit 405 that controls the various units in the image capturing device 400, a storage unit 406 that stores information handled by the control unit 405, and an input unit 407 that receives instructions and the like from an operator 420.

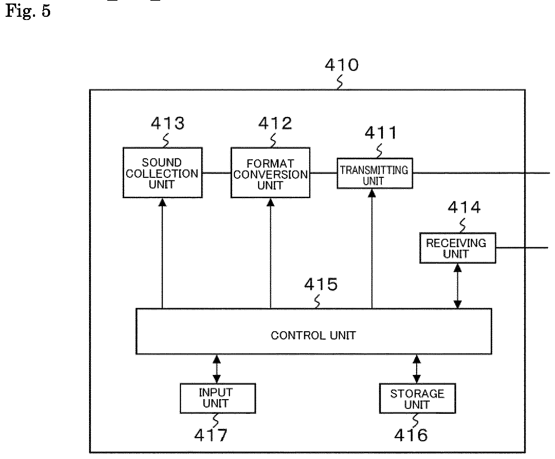

Fig. 5 schematically illustrates an example of the configuration of the sound collection device 410. The sound collection device 410 includes a transmitting unit 411; a sound collection unit (microphone) 413 that collects audio to be transmitted; a format conversion unit 412 that performs encoding processing on the collected audio, converts the audio to a transmission format, and sends the audio to the transmitting unit 411; and a receiving unit 414 that performs communication for establishing a connection. The sound collection device 410 also includes a control unit 415 that controls the various units in the sound collection device 410, a storage unit 416 that stores information handled by the control unit 415, and an input unit 417 that receives instructions and the like from the operator 420.

Fig. 6 schematically illustrates an example of the configuration of the video receiver 500. This video receiver 500 includes a receiving unit 501, a format conversion unit 502 that performs decoding processing on video in a transmission format received by the receiving unit 501 an obtains video for display, a video display unit (display) 503 that displays video on the basis of the video for display, and a transmitting unit 504 that performs communication for establishing a connection. The video receiver 500 also includes a control unit 505 that controls the various units in the video receiver 500, a storage unit 506 that stores information handled by the control unit 505, and an input unit 507 that receives instructions and the like from a viewer 520.

Fig. 7 schematically illustrates an example of the configuration of the audio player 510. This audio player 510 includes a receiving unit 511, a format conversion unit 512 that performs decoding processing on audio in a transmission format received by the receiving unit 511 an obtains audio for output, an audio output unit (speaker) 513 that outputs audio on the basis of the audio for output, and a transmitting unit 514 that performs communication for establishing a connection. The audio player 510 also includes a control unit 515 that controls the various units in the audio player 510, a storage unit 516 that stores information handled by the control unit 515, and an input unit 517 that receives instructions and the like from the viewer 520.

### [Video/Audio Path Establishment Processing]

The flowchart in Fig. 8 illustrates an example of a processing sequence leading to the establishment of respective paths (a first path and a second path) for video and audio in the network system 10 illustrated in Fig. 2.

In step ST1, the operator 420 notifies the image capturing device 400 and the sound collection device 410 that the content thereof (video and audio) is related and should be played back in synchronization.

In this case, the operator 420, the image capturing device 400, and the sound collection device 410 may each be connected by a path separate from the network 100, such as short-range wireless communication such as Bluetooth or Wi-Fi, or the operator 420, the image capturing device 400, and the sound collection device 410 may be connected as terminals of another network different from the network 100. In this case, the operator 420 communicates information between the paired devices, such as address information, a synchronization pair ID, and the like, to each of the image capturing device 400 and the sound collection device 410. Note that "Bluetooth" and "Wi-Fi" are registered trademarks.

Next, in step ST2, the image capturing device 400 and the sound collection device 410 make a connection over the network 100, confirm that the devices have the same synchronization pair ID, and reconcile time information serving as the basis for synchronized playback. Here, reconciling the time information is, for example, synchronization with current time information and matching with a time information obtainment server.

Next, in step ST3, the viewer 520 instructs the video receiver 500 to connect to the image capturing device 400 and play back video (display video), by operating a remote controller or the like.

Next, in step ST4, the video receiver 500 connects to the image capturing device 400 and requests streaming of the video on the basis of an instruction from the viewer. In this case, the connection is established in the form of a connection request from the video receiver 500 to the image capturing device 400 made over the network 100 via the optical network unit to which each device is connected.

Next, in step ST5, the image capturing device 400 notifies the video receiver 500 that, in response to the request from the video receiver 500, related audio is present, i.e., audio to be played back in synchronization with the video transmitted from the image capturing device 400 is present, over the network 100. In this case, the notification is displayed in the display of the video receiver 500, and can be confirmed by the viewer 520. As a result, the viewer 520 can easily know, from the video receiver 500, that there is audio to be played back in synchronization, and as will be described later, an instruction for synchronized playback can be made to the audio player 510, in addition to the video receiver 500, using a remote controller or the like. In this case, the notification also indicates that the audio is audio from the sound collection device 410. For example, the notification includes information for identifying the sound collection device 410, such as a device address, a device name, or the like of the sound collection device 410. This enables the viewer 520 to easily identify the transmission terminal that transmits the audio as the sound collection device 410, and efficiently instruct the audio restart device 510 to connect to the sound collection device 410.

Next, in step ST6, by operating the remote controller or the like, the viewer 520 instructs the video receiver 500 to connect to the image capturing device 400 and play back the video (display the video), instructs the audio player 510 to connect to the sound collection device 410 and play back the audio (output the audio), and also instructs the playback to be synchronized playback. This instruction to be synchronized playback is made according to information including a synchronization ID and information of synchronization target device addresses.

Here, the synchronization ID is an identifier indicating that the playback is assumed to be synchronized playback. Meanwhile, the synchronization target device addresses are the device address of the audio player 510 in the instruction made to the video receiver 500, and the device address of the video receiver 500 in the instruction made to the audio player 510.

Next, in step ST7, the video receiver 500 and the audio player 510 each send a connection request, including synchronized playback information, to the optical network unit of the network 100.

Fig. 9 illustrates an example of the format of the connection request. The connection request includes a header, a data payload, and a footer. Although not illustrated, the data payload includes connection destination address information and connection origin address information. The data payload also includes information indicating connection conditions, such as "make a peer-to-peer connection with a guaranteed bandwidth".

Here, the connection destination address is the address of the image capturing device 400 in the connection request sent from the video receiver 500 to the optical network unit (node I), and is the address of the sound collection device 410 in the connection request sent from the audio player 510 to the optical network unit (node H). The connection origin address is the address of the video receiver 500 in the connection request sent from the video receiver 500 to the optical network unit (node I), and is the address of the audio player 510 in the connection request sent from the audio player 510 to the optical network unit (node H).

The header includes the synchronized playback information. Note that the synchronized playback information can also be included in the data payload. The synchronized playback information includes the synchronization ID, the synchronization target device addresses, a time master flag, and time information. Here, the time master flag is a flag indicating whether the device that makes the connection request is a master that manages the time, and the time information is time information in the device that makes this connection request.

By including the time master flag and the time information in the synchronized playback information included in the header of the connection request sent to the optical network unit of the network 100 to which the video receiver 500 and the audio player 510 are connected in this manner, time adjustments can be made to align the time between the video receiver 500 and the audio player 510 by communicating with the optical network unit to which the video receiver 500 and the audio player 510 are connected.

Returning to Fig. 8, in step ST8, the optical network unit (node I) to which the video receiver 500 is connected routes the shortest path on the network 100 for connecting the video receiver 500 to the image capturing device 400, and the optical network unit (node H) to which the audio player 510 is connected routes the shortest path on the network 100 for connecting the audio player 510 to the sound collection device 410.

Next, in step ST9, the optical network units (nodes I and H) to which the video receiver 500 and the audio player 510 are connected communicate over the network 100 on the basis of the synchronization ID included in the synchronized playback information, and make adjustments such that the latency time difference in the respective paths falls within a predetermined length of time, e.g., a guaranteed range in which the latency time difference can be eliminated through buffering adjustment in the video receiver 500, the audio player 510, or the like.

In this case, the path adjustment is performed by changing the path on the side having the lower latency time. For example, the path on the side having the lower latency time is changed to a longer-distance path. Additionally, for example, the path on the side having the lower latency time is changed such that a path that loops a set number of times between routers is purposely added. For example, the path on the side having the lower latency time is changed to a path that includes a network device (node) having high processing latency.

Next, in step ST10, the optical network unit (node I) to which the video receiver 500 is connected connects the video receiver 500 to the image capturing device 400 over the adjusted path on the network 100, and requests the video to be streamed from the image capturing device 400 to the video receiver 500; furthermore, in step ST10, the optical network unit (node H) to which the audio player 510 is connected connects the audio player 510 to the sound collection device 410 over the adjusted path on the network 100, and requests the video to be streamed from the sound collection device 410 to the audio player 510.

Note that when the paths are adjusted as described above, connections are established for the paths of both the video and the audio, and the video and audio are being streamed, if it becomes necessary to retry the routing due to a network failure or the like, the processing of steps ST8 to ST10 in the flowchart in Fig. 8 are executed again. Then, after the latency time difference between the paths of both the video and the audio is adjusted to fall within the guaranteed range, the connections are reestablished for the paths of both the video and the audio, and the video and the audio are then streamed again.

The flowchart in Fig. 10 illustrates an example of a path adjustment processing sequence corresponding to steps ST8 and ST9 in the flowchart in Fig. 8.

In step ST11, the optical network units (nodes I and H) to which the video receiver 500 and the audio player 510 are connected start the adjustment processing.

Next, in step ST12, the optical network units (nodes I and H) route the shortest path on the network 100 for connecting the video receiver 500 to the image capturing device 400 and the shortest path on the network 100 for connecting the audio player 510 to the sound collection device 410.

Next, in step ST13, the optical network units (nodes I and H) obtain the latency time difference between the two paths. In this case, information on the number of hops (number of connection points traversed) in both paths (network paths), whether or not wavelength switching/core switching is performed at each connection point, information on distances between the connection points and whether or not there are amplifiers in the paths, the types thereof (passive/active), and the like is obtained.

Then, a latency (network latency) of both paths is calculated from the obtained information. For example, in the case of optical communication, data is exchanged at a speed of 2 × 10⁸ m/s, and thus the communication takes a time equivalent to dividing the distance by that number. The processing time of optical amplifiers, optical switching, and the like can be obtained by referring to a database.

Note that rather than calculating the path latency in this manner, it is conceivable to, for example, issue a ping command to the connection destination, calculate a response time over the path, and divide that response time in half to obtain the path latency. In this case, information on the middle of the path is not absolutely needed.

Next, in step ST14, the optical network units (nodes I and H) determine whether or not the latency time difference between both paths is within the guaranteed range. If the latency time difference is not within the guaranteed range, the optical network units (nodes I and H) move the sequence to step ST15.

In step ST15, the optical network units (nodes I and H) change the path on the side having the lower latency to increase the latency. For example, the path on the side having the lower latency time is changed to a longer-distance path. Additionally, for example, the path on the side having the lower latency time is changed such that a path that loops a set number of times between routers is purposely added. For example, the path on the side having the lower latency time is changed to a path that includes a network device (node) having high processing latency.

After the processing of step ST15, the optical network units (nodes I and H) return to the processing of step ST13 and repeat the same processing as that described above.

If the latency time difference is within the guaranteed range in step ST14, the optical network units (nodes I and H) end the adjustment processing in step ST16.

By performing the adjustment processing in this manner, the final routing can be determined to a routing in which the latency time difference between the path on the network 100 for connecting the video receiver 500 to the image capturing device 400 and the path on the network 100 for connecting the audio player 510 to the sound collection device 410 is adjusted to fall within the guaranteed range.

An example of the above-described adjustment processing will be given with reference to Fig. 2. Note that Fig. 2 assumes that bandwidth-guaranteed routing can be performed freely among all the nodes.

The node I, which is the optical network unit that received the connection request made to the image capturing device 400 and including the synchronized playback information from the video receiver 500, routes a path 1, e.g., node I → node G → node F → node C → node A, as the shortest path on the network 100 for connecting the video receiver 500 to the image capturing device 400.

Then, the node I collects the latency times between the adjacent nodes, stored in the storage units of the nodes in the middle, and finds the sum thereof to calculate a latency time T1 of the path 1. Here, there is a peer-to-peer bandwidth guarantee between the adjacent nodes, and if a latency of Tn occurs across the board, T1 = 4 × Tn.

Additionally, the node H, which is the optical network unit that received the connection request made to the sound collection device 410 and including the synchronized playback information from the audio player 510, routes a path 2, e.g., node H → node G → node F → node C → node E → node D → node B, as the shortest path on the network 100 for connecting the audio player 510 to the sound collection device 410.

Then, the node H collects the latency times between the adjacent nodes, stored in the storage units of the nodes in the middle, and finds the sum thereof to calculate a latency time T2 of the path 2. Here, there is a peer-to-peer bandwidth guarantee between the adjacent nodes, and if a latency of Tn occurs across the board, T2 = 6 × Tn.

The node I and the node H share the latency time T1 of the path 1 and the latency time T2 of the path 2 over the network 100. Here, it is assumed that T1 < T2, and the latency time difference is not within the predetermined length of time. In this case, the node I routes a new path 1', e.g., node I → node G → node F → node C → node J → node C → node A, as the path on the network 100 for connecting the video receiver 500 to the image capturing device 400, which is the side having the lower latency time.

Then, the node I collects the latency times between the adjacent nodes, stored in the storage units of the nodes in the middle, and finds the sum thereof to calculate a latency time T1' of the path 1'. Here, there is a peer-to-peer bandwidth guarantee between the adjacent nodes, and if a latency of Tn occurs across the board, T1' = 6 × Tn. Through this, the latency time difference between the video and audio paths is eliminated, the latency time difference between the video and audio paths falls within the predetermined length of time, and the adjustment ends.

Another example of the above-described path adjustment processing will be given with reference to Fig. 2. Note that Fig. 2 assumes that bandwidth-guaranteed routing can be performed freely among all the nodes.

The node I, which is the optical network unit that received the connection request made to the image capturing device 400 and including the synchronized playback information from the video receiver 500, routes a path 1, e.g., node I → node G → node F → node C → node A, as the shortest path on the network 100 for connecting the video receiver 500 to the image capturing device 400.

Then, the node I issues a ping command for calculating a round-trip time (RTT) of the routing to the node A, which is the optical network unit to which the image capturing device 400 is connected, and calculates the time required to receive a response thereto to obtain the latency time T1 of the path 1.

Additionally, the node H, which is the optical network unit that received the connection request made to the sound collection device 410 and including the synchronized playback information from the audio player 510, routes a path 2, e.g., node H → node G → node F → node C → node E → node D → node B, as the shortest path on the network 100 for connecting the audio player 510 to the sound collection device 410.

Then, the node H issues a ping command for calculating a round-trip time (RTT) of the routing to the node B, which is the optical network unit to which the sound collection device 410 is connected, and calculates the time required to receive a response thereto to obtain the latency time T2 of the path 2.

The node I and the node H share the latency time T1 of the path 1 and the latency time T2 of the path 2 over the network 100. For example, assume that T1 < T2. The node I routes a new path 1', e.g., node I → node G → node F → node C → node J → node C → node A, as the path on the network 100 for connecting the video receiver 500 to the image capturing device 400, which is the side having the lower latency time.

Then, the node I issues a ping command for calculating a round-trip time (RTT) of the routing to the node A, which is the optical network unit to which the image capturing device 400 is connected, and calculates the time required to receive a response thereto to obtain the latency time T1' of the path 1'.

The node I and the node H share the latency time T1' of the path 1' and the latency time T2 of the path 2 over the network 100. For example, assume that T1' > T2. If that latency time difference falls within the predetermined length of time, the adjustment of the latency time difference between the video and audio paths ends. On the other hand, if the latency time difference does not fall within the predetermined length of time, routing is performed to change the path on the side having the lower latency time until the latency time difference falls within the predetermined length of time.

As described above, by adjusting the latency time difference between the video and audio paths on the network 100 to fall within the predetermined length of time, e.g., to fall within a guaranteed range capable of eliminating the latency time difference through buffering adjustment by the video receiver 500, the audio player 510, or the like, the size of a buffer memory prepared on the receiving side, i.e., in the video receiver 500, the audio player 510, or the like, for the purpose of synchronized playback, can be reduced, which makes it possible to cut down on costs.

### [Buffering Processing for Synchronized Playback on Receiving Side]

Buffering processing for synchronized playback performed on the receiving side, i.e., in the video receiver 500, the audio player 510, or the like, will be described next. Information on a post-adjustment video path latency time t1 and audio path latency time t2 is sent from the node I, which is the optical network unit to which the video receiver 500 is connected, to the video receiver 500. Additionally, information on the post-adjustment video path latency time t1 and audio path latency time t2 is sent from the node H, which is the optical network unit to which the audio player 510 is connected, to the audio player 510.

When the video path latency time t1 is lower than the audio path latency time t2, the video receiver 500 sets the buffering size when playing back (displaying) video to t2 - t1. On the other hand, when the video path latency time t1 is greater than or equal to the audio path latency time t2, the buffering size when playing back (displaying) video is set to zero. For example, with the example of the configuration of the video receiver 500 illustrated in Fig. 6, a memory for buffering is provided in the format conversion unit 502 or the video display unit 503, for example, and the buffering size is controlled by the control unit 505.

On the other hand, when the audio path latency time t2 is less than the video path latency time t1, the audio player 510 sets the buffering size when playing back (outputting) audio to t1 - t2. On the other hand, when the audio path latency time t2 is greater than or equal to the video path latency time t1, the buffering size when playing back (outputting) audio is set to zero. For example, with the example of the configuration of the audio player 510 illustrated in Fig. 7, a memory for buffering is provided in the format conversion unit 512 or the audio output unit 513, for example, and the buffering size is controlled by the control unit 515.

By having the video receiver 500 and the audio player 510 set the buffering sizes as described above, the latency time difference between the video and audio paths occurring on the network 100 can be eliminated, which makes it possible to perform the synchronized playback of video and audio in a favorable manner.

In this case, the video receiver 500 and the audio player 510 obtain the information on the latency times in both the video and audio paths from the network 100 (nodes I and H), which enables effective control. In this case, for example, the control can be carried out while consuming little power when the buffer memory has a bank structure and can be switched to a power-saving mode when not being used in the respective regions.

Fig. 11 illustrates an example of a relationship between the latency time difference between the video and audio paths on the network 100 and buffering sizes in the video receiver 500 and the audio player 510. Note that this example illustrates a case where the video path latency time t1 is lower than the audio path latency time t2.

(a) in Fig. 11 illustrates video Va output from the image capturing device 400 and sent to the network 100, and (c) in Fig. 11 illustrates video Vb output from the network 100 and sent to the video receiver 500. In this case, the video Vb is delayed by the video path latency time t1 on the network 100 relative to the video Va.

Meanwhile, (b) in Fig. 11 illustrates audio Sa output from the sound collection device 410 and sent to the network 100, and (d) in Fig. 11 illustrates audio Sb output from the network 100 and sent to the audio player 510. In this case, the audio Sb is delayed by the audio path latency time t2 on the network 100 relative to the audio Sa.

In this case, t2 - t1 is the latency time difference between the video and audio paths occurring on the network 100. As such, the buffering size in the video receiver 500 is set to t2 - t1, the buffering size in the audio player 510 is set to zero, and the video and audio are played back in synchronization. (e) in Fig. 11 illustrates video Vc played back (displayed) by the video receiver 500, and (f) in Fig. 11 illustrates audio Sc played back (output) by the audio player 510.

The foregoing described an example in which information on the video path latency time t1 and the audio path latency time t2 is sent to both the video receiver 500 and the audio player 510 from the network 100 (nodes I and H). However, it is also conceivable for information on the buffering size to be set for the video receiver 500 and the audio player 510 to be sent to both of those devices from the network 100 (nodes I and H).

For example, when the video path latency time t1 is lower than the audio path latency time t2, the node I, which is the optical network unit to which the video receiver 500 is connected, sends information indicating "t2 - t1" to the video receiver 500 as the information on the buffering size, and the node H, which is the optical network unit to which the audio player 510 is connected, sends information indicating "zero" to the audio player 510 as the information on the buffering size.

Additionally, for example, when the audio path latency time t2 is lower than the video path latency time t1, the node I, which is the optical network unit to which the video receiver 500 is connected, sends information indicating "zero" to the video receiver 500 as the information on the buffering size, and the node H, which is the optical network unit to which the audio player 510 is connected, sends information indicating "t2 - t1" to the audio player 510 as the information on the buffering size.

Additionally, for example, when the video path latency time t1 is the same as the audio path latency time t2, the node I, which is the optical network unit to which the video receiver 500 is connected, sends information indicating "zero" to the video receiver 500 as the information on the buffering size, and the node H, which is the optical network unit to which the audio player 510 is connected, sends information indicating "zero" to the audio player 510 as the information on the buffering size.

It is also conceivable for the setting of the buffering size in the video receiver 500 and the audio player 510 to be further based on a time difference between the playback processing by those device.

For example, assume that tp 1 represents the time required for the processing by the video receiver 500 to obtain the video for display from the video in the transmission format received from the network 100 (node I), and tp2 represents the time required for the processing by the audio player 510 to obtain the audio for output from the audio in the transmission format received from the network 100 (node H).

Here, the time tp1 is, for example, the time required for processing in the format conversion unit 502 or the like, in the example of the configuration of the video receiver 500 illustrated in Fig. 6. Likewise, the time tp2 is, for example, the time required for processing in the format conversion unit 512 or the like, in the example of the configuration of the audio player 510 illustrated in Fig. 7.

These times tp 1 and tp2 are shared by the video receiver 500 and the audio player 510 by the video receiver 500 and the audio player 510 exchanging information with each other. Then, when finalizing the buffering size, the video receiver 500 and the audio player 510 use t1 + tp 1 instead of the aforementioned t1, and t2 + tp2 instead of the aforementioned t2.

Through this, in the video receiver 500 and the audio player 510, the buffering size is further set on the basis of the time difference between the playback processing in the video receiver 500 and the audio player 510, which makes it possible to perform synchronized playback of the video and audio even more accurately.

Fig. 12 illustrates an example of a relationship between a latency time difference in video and audio paths on the network 100, a time difference between playback processing in the video receiver 500 and the audio player 510, and buffering sizes in the video receiver 500 and the audio player 510. Note that this example illustrates a case where t1 + tp 1 is less than t2 + tp2.

(a) in Fig. 12 illustrates the video Va output from the image capturing device 400 and sent to the network 100, and (c) in Fig. 12 illustrates the video for display Vb obtained by performing signal processing such as decoding on the video in the transmission format sent from the network 100 (node I) to the video receiver 500. In this case, the video for display Vb is delayed by a length equivalent to adding the latency time tp1 in the signal processing to the video path latency time t1 on the network 100 relative to the video Va.

In addition, (b) in Fig. 12 illustrates the audio Sa output from the sound collection device 410 and sent to the network 100, and (d) in Fig. 12 illustrates the audio for output Sb obtained by performing signal processing such as decoding on the audio in the transmission format sent from the network 100 (node H) to the audio player 510. In this case, the audio for output Sb is delayed by a length equivalent to adding the latency time tp2 in the signal processing to the audio path latency time t2 on the network 100 relative to the audio Sa.

In this case, (t2 + tp2) - (t1 + tp1) is the final latency time difference between the video for display Vb and the audio for output Sb. As such, the buffering size in the video receiver 500 is set to (t2 + tp2) - (t1 + tp 1), the buffering size in the audio player 510 is set to zero, and the synchronized playback of the video and audio is performed with even higher accuracy. (e) in Fig. 12 illustrates the video Vc played back (displayed) by the video receiver 500, and (f) in Fig. 12 illustrates the audio Sc played back (output) by the audio player 510.

As described above, in the network system 10 illustrated in Fig. 2, the network 100 (nodes I and H) performs adjustment such that the latency time difference between the video and audio paths falls within a predetermined length of time, e.g., within a guaranteed range capable of eliminating the latency time difference through buffering adjustment performed in the video receiver 500, the audio player 510, and the like. Accordingly, the sizes of buffer memories prepared on the receiving side (the video receiver 500, the audio player 510) for synchronized playback can be reduced, which can contribute to reduced costs and the like.

Additionally, in the network system 10 illustrated in Fig. 2, the network 100 (nodes I and H) sends information on the adjusted latency times to the video receiver 500 and the audio player 510. This makes it possible to effectively set appropriate sizes for the buffering sizes in the video receiver 500 and the audio player 510 during synchronized playback of video and audio, which makes it possible to perform the synchronized playback processing in a favorable manner.

Additionally, in the network system 10 illustrated in Fig. 2, the video receiver 500 and the audio player 510 include the synchronized playback information in the connection request sent to the digital service unit when there is content which is to be played back in synchronization with the content sent from the transmission terminal. Accordingly, in the digital service unit, processing for adjusting the paths is performed such that the latency time difference between the plurality of content paths to be played back in synchronization falls within a predetermined length of time, which makes it possible to reduce the size of the buffer memory prepared on the receiving side for the synchronized playback.

Additionally, in the network system 10 illustrated in Fig. 2, the video receiver 500 and the audio player 510 set the buffering size when playing back content (video and audio) on the basis of the information on the latency times adjusted on the basis of the synchronized playback information, which is sent from the digital service unit (nodes I and H). This makes it possible to effectively set appropriate sizes for the buffering sizes in the video receiver 500 and the audio player 510 during synchronized playback of video and audio.

### <2. Variations>

The foregoing embodiment described an example in which the latency time difference between the video path connecting the image capturing device 400 with the video receiver 500 and the audio path connecting the sound collection device 410 with the audio player 510 is brought within a predetermined length of time. The present technique is not limited thereto, however, and for example, an example in which a latency time difference between two video paths is brought within a predetermined length of time and an example in which a latency time difference between two audio paths is brought within a predetermined length of time can be configured in a similar manner. A case is also conceivable in which the number of paths for synchronized playback is not two, but is instead three or more, for example.

Additionally, the foregoing embodiment described an example in which nodes I and H, which are the optical network units to which the video receiver 500 and the audio player 510 are connected, adjust the path latency difference to fall within the predetermined length of time. The network devices that bring the path latency difference within the predetermined length of time are not limited to nodes I and H, and it is conceivable to use another network device, e.g., a dedicated network device that adjusts the path latency difference.

Additionally, in the foregoing embodiment, the present technique is applied to an optical network system that transmits optical signals, but the present technique can be similarly applied in a network system that transmits electrical signals.

Additionally, the foregoing embodiment described an example in which the transmission terminals are the image capturing device 400 and the sound collection device 410, the reception terminals are the video receiver 500 and the audio player 510, and video and audio content are played back in a synchronized manner. However, the present technique is not limited to the synchronized playback of content, and can of course be applied similarly in synchronized control of a plurality of systems, such as robots, and furthermore when synchronizing system control and content playback.

Although preferred embodiments of the present disclosure have been described in detail with reference to the accompanying drawings, the technical scope of the present disclosure is not limited to these examples. It should be apparent to those skilled in the art in the technical fields of the present disclosure that various examples of changes or modifications can be made within the scope of the technical spirit described in the claims and are, of course, to be construed as falling within the technical scope of the present disclosure.

Further, the effects described in the present specification are merely explanatory or exemplary and are not intended as limiting. That is, the techniques according to the present disclosure may exhibit other effects apparent to those skilled in the art from the description in the present specification, in addition to or in place of the above effects.

Further, the present technique can also have the following configurations.
(1) A network capable of determining a plurality of paths for sending, from a transmission terminal to a reception terminal, a corresponding plurality of pieces of content to be played back in synchronization, the network including:
   an adjustment unit that adjusts a latency time difference between the plurality of paths to fall within a predetermined length of time.
(2) The network according to (1),
   wherein the adjustment unit performs adjustment by changing a path on a side having a lower latency time.
(3) The network according to (2),
   wherein the adjustment unit performs the adjustment by changing the path on the side having the lower latency time to a longer-distance path.
(4) The network according to (2),
   wherein the adjustment unit performs the adjustment by changing the path on the side having the lower latency time to a path including a network device having a high processing latency.
(5) The network according to any one of (1) to (4),
   wherein the adjustment unit is included in a receiving-side digital service unit that constitutes the plurality of paths.
(6) The network according to (5),
   wherein the receiving-side digital service unit that constitutes the plurality of paths performs adjustment on the basis of synchronized playback information included in a connection request sent from the reception terminal to the transmission terminal.
(7) The network according to (6),
   wherein the synchronized playback information includes an identifier indicating that synchronized playback is assumed to be performed.
(8) The network according to (6),
   wherein the synchronized playback information includes an address of a reception terminal to be synchronized.
(9) The network according to any one of (1) to (8),
   wherein the adjustment unit sends information on an adjusted latency time to a plurality of reception terminals connected to the plurality of paths.
(10) The network according to any one of (1) to (9),
   wherein the plurality of paths include a first path and a second path, the first path connecting an image capturing device which is a transmission terminal to a video receiver which is a reception terminal, and the second path connecting a sound collection device which is a transmission terminal to an audio player which is a reception terminal.
(11) A method of adjusting a network capable of determining, as dedicated lines, a plurality of paths for sending, from a transmission terminal to a reception terminal, a corresponding plurality of pieces of content to be played back in synchronization, the method including:
   adjusting a latency time difference between the plurality of paths to fall within a predetermined length of time.
(12) A network device including:
   a control unit that controls processing of selecting a path over which to send content from a transmission terminal to a reception terminal on the basis of a connection request from the reception terminal to the transmission terminal, and processing of adjusting, on the basis of the connection request, a latency time difference from another path over which to send other content to be played back in synchronization with the content to fall within a predetermined length of time.
(13) A reception terminal including:
   a transmission unit that sends, to a digital service unit on a network to which the reception terminal is connected, a connection request to a transmission terminal, wherein when there is other content to be played back in synchronization with content sent from the transmission terminal, the connection request includes synchronized playback information.
(14) The reception terminal according to (13), further including:
   a control unit that sets a buffering size used when playing back the content on the basis of information, sent from the digital service unit, on a latency time adjusted on the basis of the synchronized playback information.
(15) The reception terminal according to (14),
   wherein the control unit sets the buffering size used when playing back the content further on the basis of a playback processing time difference from another reception terminal that plays back the other content to be played back in synchronization.
(16) A transmission terminal including:
   a receiving unit that receives, from a digital service unit on a network to which the transmission terminal is connected, a connection request from a reception terminal; and
   a transmission unit that, when the connection request is received from the reception terminal and there is other content to be played back in synchronization with content transmitted from the transmission terminal to the reception terminal, sends, to the digital service unit, a notification to the reception terminal that the other content is present.
(17) The transmission terminal according to (16),
   wherein the notification includes information for specifying the transmission terminal that transmits the other content.

### [Reference Signs List]

- 1A, 1B: Terminal
- 2A, 2B: Network cable
- 3A, 3B: Optical network unit
- 4A, 4B: Multicore fiber
- 5: Optical switch/router
- 6: Cloud
- 7: Storage
- 8: Wireless base station
- 10: Network system
- 100: Network
- 300: Node
- 301, 304: Receiving unit
- 302, 305: Transmitting unit
- 303: Path selection unit
- 306: Control unit
- 307: Storage unit
- 400: Image capturing device
- 401: Transmitting unit
- 402: Format conversion unit
- 403: Image capturing unit
- 404: Receiving unit
- 405: Control unit
- 406: Storage unit
- 407: Input unit
- 410: Sound collection device
- 411: Transmitting unit
- 412: Format conversion unit
- 413: Sound collection unit
- 414: Receiving unit
- 415: Control unit
- 416: Storage unit
- 417: Input unit
- 420: Operator
- 500: Video receiver
- 501: Receiving unit
- 502: Format conversion unit
- 503: Video display unit
- 504: Transmitting unit
- 505: Control unit
- 506: Storage unit
- 507: Input unit
- 510: Audio player
- 511: Receiving unit
- 512: Format conversion unit
- 513: Audio output unit
- 514: Transmitting unit
- 515: Control unit
- 516: Storage unit
- 517: Input unit
- 520: Viewer

## Claims

1. A network capable of determining a plurality of paths for sending, from a transmission terminal to a reception terminal, a corresponding plurality of pieces of content to be played back in synchronization, the network comprising:
an adjustment unit that adjusts a latency time difference between the plurality of paths to fall within a predetermined length of time.

2. The network according to claim 1,
wherein the adjustment unit performs adjustment by changing a path on a side having a lower latency time.

3. The network according to claim 2,
wherein the adjustment unit performs the adjustment by changing the path on the side having the lower latency time to a longer-distance path.

4. The network according to claim 2,
wherein the adjustment unit performs the adjustment by changing the path on the side having the lower latency time to a path including a network device having a high processing latency.

5. The network according to claim 1,
wherein the adjustment unit is included in a receiving-side digital service unit that constitutes the plurality of paths.

6. The network according to claim 5,
wherein the receiving-side digital service unit that constitutes the plurality of paths performs adjustment on the basis of synchronized playback information included in a connection request sent from the reception terminal to the transmission terminal.

7. The network according to claim 6,
wherein the synchronized playback information includes an identifier indicating that synchronized playback is assumed to be performed.

8. The network according to claim 6,
wherein the synchronized playback information includes an address of a reception terminal to be synchronized.

9. The network according to claim 1,
wherein the adjustment unit sends information on an adjusted latency time to a plurality of reception terminals connected to the plurality of paths.

10. The network according to claim 1,
wherein the plurality of paths include a first path and a second path, the first path connecting an image capturing device which is a transmission terminal to a video receiver which is a reception terminal, and the second path connecting a sound collection device which is a transmission terminal to an audio player which is a reception terminal.

11. A method of adjusting a network capable of determining, as dedicated lines, a plurality of paths for sending, from a transmission terminal to a reception terminal, a corresponding plurality of pieces of content to be played back in synchronization, the method comprising:
adjusting a latency time difference between the plurality of paths to fall within a predetermined length of time.

12. A network device comprising:
a control unit that controls processing of selecting a path over which to send content from a transmission terminal to a reception terminal on the basis of a connection request from the reception terminal to the transmission terminal, and processing of adjusting, on the basis of the connection request, a latency time difference from another path over which to send other content to be played back in synchronization with the content to fall within a predetermined length of time.

13. A reception terminal comprising:
a transmission unit that sends, to a digital service unit on a network to which the reception terminal is connected, a connection request to a transmission terminal, wherein when there is other content to be played back in synchronization with content sent from the transmission terminal, the connection request includes synchronized playback information.

14. The reception terminal according to claim 13, further comprising:
a control unit that sets a buffering size used when playing back the content on the basis of information, sent from the digital service unit, on a latency time adjusted on the basis of the synchronized playback information.

15. The reception terminal according to claim 14,
wherein the control unit sets the buffering size used when playing back the content further on the basis of a playback processing time difference from another reception terminal that plays back the other content to be played back in synchronization.

16. A transmission terminal comprising:
a receiving unit that receives, from a digital service unit on a network to which the transmission terminal is connected, a connection request from a reception terminal; and
a transmission unit that, when the connection request is received from the reception terminal and there is other content to be played back in synchronization with content transmitted from the transmission terminal to the reception terminal, sends, to the digital service unit, a notification to the reception terminal that the other content is present.

17. The transmission terminal according to claim 16,
wherein the notification includes information for specifying the transmission terminal that transmits the other content.
